# EUROPÄISCHE PATENTSCHRIFT

(11) **EP 1 337 588 B1**
(45) Veröffentlichungstag und Bekanntmachung des Hinweises auf die Patenterteilung: **14.01.2009**
(21) Anmeldenummer: 01985262.3
(22) Anmeldetag: 25.09.2001
(51) Int. Cl.: C08L 83/04, C08K 5/54, H01B 3/46

(54) **SILIKONKAUTSCHUKFORMULIERUNGEN UND DEREN VERWENDUNG**
SILICONE RUBBER FORMULATIONS AND THE USE THEREOF
FORMULATIONS DE CAOUTCHOUC SILICONE ET LEUR UTILISATION

(30) Priorität: 25.09.2000 DE 10047276
(43) Veröffentlichungstag der Anmeldung: 27.08.2003
(73) Patentinhaber: Momentive Performance Materials GmbH, 51368 Leverkusen (DE)
(72) Erfinder: TIBURTIUS, Christoph, 50999 Köln (DE); WENDT, Eckhard, 73257 Köngen (DE); GANTER, Beate, 51069 Köln (DE)
(86) Internationale Anmeldenummer: PCT/EP2001/011092
(87) Internationale Veröffentlichungsnummer: WO 2002/024813

(56) Entgegenhaltungen:
- EP-A- 0 345 965
- EP-A- 0 497 349
- US-A- 5 994 461

## Beschreibung

Die vorliegende Erfindung betrifft die Verwendung von Siliconkautschukformulierungen mit einer niedrigen Dielektrizitätszahl zur Herstellung von Isolatoren.

Die Herstellung von Hochspannungsisolatoren kann grundsätzlich aus allen isolierenden anorganischen oder organischen Werkstoffen erfolgen, wenn neben der Eigenschaft des elektrischen Isoliervermögens keine weiteren Eigenschaften wie Wetter-, Korona-, oder UV-Beständigkeit gefordert werden.

Speziell für die Freiluft-Hochspannungsisolatoren hat sich in vielen Fällen Porzellan bewährt. Gleichwohl ersetzte man spätestens seit 1977 Porzellan erfolgreich durch ausgewählte isolierende Thermoplaste aus der Gruppe von Epoxiden und Urethanen, wie in der DE 2 746 870 beschreiben oder durch Elastomere aus der Gruppe von Ethylenvinylacetat-, AcrylatCopolymere, EPDM oder Silicone wie sie in der US 3 532 664 und der US 3 922 442 beschrieben sind. Diese Werkstoffe haben sich auch in anderen Bereichen zur Herstellung von Isolatoren für die Energieübertragung bewährt.

Insbesondere Siliconelastomere haben wegen ihrer Isolationseigenschaften, ihres Regenerationsverhaltens, der Hydrophobie nach Koronaeinwirkung, also nach Hochspannungsüberschlägen und Lichtbogenbildung auf der Oberfläche, und der Witterungsbeständigkeit zunehmend Interesse gefunden, wie aus US 3 965 065 und IEEE Transactions on Dielectrics a. Electrical Insulation Vol. 6 Nr. 3, 1999 bekannt ist. In einer Vielzahl von Patenten und Veröffentlichungen sind Wege aufgezeigt, die einzelnen Anforderungen in immer höherem Maße zu erfüllen.

Die meisten Veröffentlichungen sind darauf ausgerichtet, die Oberfläche unter Koronaeinwirkung möglichst lange unversehrt zu erhalten. Die Aufgabenstellung ist dabei vor allem auf die Simulierung von Witterungs- und Klimaeinflüssen gerichtet wie z.B. der in den von EP 470 745 vorgestellten Sprühtests. Nachteilig ist hierbei, daß die Prüfungen langwierig sind.

Die schnellere Bewertung der Koronabeständigkeit erfolgt im Laborbereich mit relativ kurzfristig durchführbaren Methoden z. B. der Lichtbogenfestigkeit nach DIN 57441, der Kriechwegbildung nach Stromfluß bzw. Widerstandszeit unter Elektrolyteinwirkung nach DIN 57303 VDE 0303 T.10 IEC 587 sowie der Durchschlagfestigkeit gemäß VDE 0441. Die Testergebnisse differenzieren allerdings oft nicht ausreichend gut, so daß eine Reihe von Verfeinerungen bei der Auswertung vorgeschlagen wurden. Eine Möglichkeit ist die zusätzlich über die Norm hinausgehende Messung des Masseverlustes bei einer Bewertung nach IEC 587.

Hierbei haben sich grundsätzlich zwei wesentliche Prinzipien der verwendeten Siliconelastomere als vorteilhaft herausgestellt: Dies sind zum Einen die Formulierungen, die zu schwer entzündbaren Siliconkautschuken unter Verwendung von Aluminiumtrihydrat oder dessen Kombination mit Boraten, wie in US 3 965 065 oder EP-A-0 928 008 beschrieben, führen und zum Anderen Formulierungen mit Metalloxiden aus der Gruppe von Ti-, Ce-, Fe-, Zr-oxide, andere Lanthanoidoxide oder Spinellen des Fe, Co, Ti gemäß den US 4 399 064, US 4 355 129 oder US 4 320 044. Darüber hinaus ist der Zusatz von organischen Antioxidantien bekannt. Weiterhin besteht die Möglichkeit, bei Verwendung von Aluminiumtrihydrat bzw. oberflächenreichem TiO₂ durch deren Nachbehandlung deren Leistungsvermögen zu verbessern. Ebenfalls können durch ausgewählte Oberflächenbereiche bzw. Korngrößen oder die chemische Reinheit Verbesserungen erzielt werden. Als weitere technische Lösung wurde vorgeschlagen, Flammwidrigkeit oder Koronabeständigkeit r mit zusätzlichen Mengen Pt im ppm-Bereich gemäß der US 4 288 360 oder EP-A-0 218 461 zu bewirken. Die beiden letzten Patente beschreiben mit Peroxiden katalysiert vernetzte Kautschuke. Die EP -0 218 461 lehrt, wie man mit feinteiligem TiO₂ und Platinverbindungen Kautschuke mit erhöhter Koronabeständigkeit ohne Verwendung von Aluminiumtrihydrat erzeugen kann. Es handelt sich jedoch um Elastomere, die mit Hilfe von Peroxiden vernetzt wurden. Eine Lehre, wie man ohne TiO₂ und ohne Peroxid durch Auswahl eines anderen geeigneten Vernetzers ein koronabeständiges Elastomer erzeugen kann, wird dort nicht gegeben. Die Verwendung der Metalloxide oder der Aluminiumoxidhydrate erfolgt in Mengen von 2-60%. Hieraus ergeben sich Probleme, da bei den großen Mengen der eingesetzten Oxide und bei gleichzeitig gewünschter dazu abweichender Farbgebung der Einsatz zusätzlicher großer Mengen an weiteren Pigmenten erforderlich wird. Dadurch verschlechtern sich die eigentlichen Vorteile der Silicon-Isolatoren, wie hinreichende mechanische Festigkeit, geringe Dielektrizitätszahl (DK) = hoher Wechselstromwiderstand, geringer elektrischer Verlustfaktor, geringe Dichte und gute Pigmentierbarkeit.

Die bekannten Systeme sind bisher vorwiegend mit Hilfe von Peroxiden oder über Hydrosilylierungsreaktionen gehärtet worden.

Die Vernetzung von hochgefüllten Kautschuken mittels Platin-katalysierter Hydrosilylierung für den Anwendungsbereich von extrem hitze- u. flammfesten Isolierungen ist z.B. in US 4 269 753 sowie DE 197 40 631 beschrieben worden. Aus den Patenten US 5 668 205, US 5 880 199 sind weitere Beispiele für Kautschuke bekannt, die mit Hilfe von SiH-Siloxanen gehärtet werden. Hier hat man weitere neue Zusätze in Systeme mit Aluminiumtrihydrat eingearbeitet. US 5 994 461 offenbart, daß der Austausch des linearen Vinylsiloxanpolymers durch ein verzweigtes Vinylsiloxanpolymer, z.B. ein Harz, zu einer verbesserten Kriechstromfestigkeit führt, wobei die festen Harze zuerst in einem Lösungsmittel aufgelöst werden müssen, um nach Verteilung in den anderen Mischungsbestandteilen hiermit reagieren zu können.
Die EP-A-0 359 252 und EP-A-0 928 008 sind insbesondere darauf ausgerichtet, die Lichtbogenfestigkeit u. Kriechwegbildung zu erhöhen.

Aufgabe der vorliegenden Erfindung ist es gewesen, die Verwendung vernetzbarer Siliconkautschukformulierungen mit einer niedrigen Dielektrizitätszahl; einem geringen elektrischen Verlustfaktor und einer hohen Koronabeständigkeit, d.h. ausreichend geringer Kriechwegbildung und hoher Lichtbogenbeständigkeit für die Herstellung von Isolatoren zur Verfügung zu stellen, die nicht die Nachteile des Standes der Technik aufweisen.

Überraschenderweise hat man gefunden, daß die Nachteile, wie geringe Korona- und Hochspannungsbeständigkeit der Aluminiumoxid- und Aluminiumhydratfreien Siliconkautschukmischungen durch die erfindungsgemäß verwendeten Silikonkautschukformulierungen überkommen werden können. Die erfindungsgemäß verwendeten Silikonkaütschukformulierungen weisen einen hohen Widerstand gegen Koronaeinwirkung auf, wenn man diese mit einem Hydrosilylierungskatalysator auf der Basis eines Metalls der Platingruppe unter Verwendung von ausgewählten Polyhydrogensiloxanen vernetzt.

Es handelt sich hierbei um vernetzbare Silikonkautschukformulierungen, die eine möglichst niedrige relative Dielektrizitätszahl (DZ) aufweisen., Die DZ die den Wechselstromwiderstand mitbestimmt soll einen Wert von kleiner als 3,3, bevorzugt kleiner als 3,2 besitzen, darüber hinaus sollen die Mischungen einen geringen elektrischen Verlustfaktor von unter 0,010 eine geringe Dichte von kleiner 1,3 g/cm³ aufweisen, und wenig Pigmente enthalten aber trotzdem das Leistungsvermögen der heute bekannten Isolatorenmischungen aufweisen. Hierzu wird als Bewertungsmaßstab insbesondere die Einstufung in die Hochspannungsfestigkeitsklassen sowie der Masseverlust bei der Messung der Hochspannungskriechwegbildung nach IEC 587 herangezogen.

Die vorliegende Erfindung stellt die Verwendung vernetzbarer Silikonkautschukformulierungen zur Herstellung von Isolatoren bereit, bestehend aus:
A) mindestens ein Polysiloxan der Formel (I)

   **R'SiR"₂O(SiR"₂O)ₓSiR"₂R',**

   worin die Substituenten R' und R" jeweils gleich oder verschieden sein können, und jeweils Alkylreste mit 1-12 C-Atomen, Arylreste, Vinylreste und Fluoralkylreste mit 1-12 C-Atomen sind, x einen Wert von 0 bis 12000 besitzt, und das über mindestens zwei olefinisch ungesättigte Mehrfachbindungen verfügt, und das gegebenenfalls Verzweigungseinheiten der Formel SiO_{4/2} und R'SiO_{3/2} aufweisen kann, worin R' die oben angegebene Bedeutung aufweisen kann,
B) gegebenenfalls mindestens einen Füllstoff mit einer spezifischen Oberfläche zwischen 50 und 500 m²/g nach BET,
C) gegebenenfalls mindestens einen Füllstoff mit einer spezifischen Oberfläche unter 50 m²/g nach BET,
D) gegebenenfalls mindestens einen weiteren Hilfsstoff,
E) gegebenenfalls mindestens ein gesättigtes Hydrophobierungsmittel aus der Gruppe, bestehend aus Disilazanen, Siloxandiolen, Alkoxysilanen Silylaminen, Silanolen, Acetoxysiloxane, Acetoxysilane, Chlorsilane, Chlorsiloxanen und Alkoxysiloxanen,
F) gegebenenfalls mindestens ein ungesättigtes Hydrophobierungsmittel aus der Gruppe, bestehend aus mehrfach Vinyl-substituierten Methyldisilazanen, und Methylsilanolen und Alkoxysilanen jeweils mit ungesättigten Resten aus der Gruppe, bestehend aus Alkenyl, Alkenylaryl, Acryl und Methacryl,
G) gegebenenfalls mindestens ein trimethylsilylendgestopptes Polysiloxan,
H) gegebenenfalls mindestens einen Inhibitor für die Hydrosilylierungsreaktion,
I) mindestens ein Polyhydrogensiloxan, das über mindestens zwei direkt an verschiedene Siliciumatome gebundene Wasserstoffatome verfügt, und einen Anteil von direkt an ein Siliziumatom gebundenen Wasserstoffatomen zwischen 0,5 und 7 mmol/g aufweist, gemäß der Formel II

   X₂DₘD^{H}ₙ (II)

   worin
   a) X = M, m:n > 1, n≥ 2 und m+n > 4,
   b) X = M^{H}, m ≥ 1, n ≥ 0 und m+n ≥ 1, oder
   c) X = M und M^{H}, m ≥ 1 und n > 0, und
J) mindestens einen Katalysator enthaltend ein Element der Platingruppe,
wobei die Anwesenheit von mehr als 3 Gewichtsteilen Metalloxide, wie Oxide und/oder Carbonate sowie weiterer Salze und Komplexverbindungen des Fe, Al, Zn, Ti, Zr, Ce oder anderer Lanthanoide bezogen auf 100 Gewichtsteile der Komponente A) ausgenommen ist.

Die erfindungsgemäß verwendeten Silikonkautschukformulierungen weisen eine niedrige Dielektrizitätszahl, einen geringeren elektrischen Verlustfaktor und eine erhöhte Koronabeständigkeit auf.

In einer bevorzugten Ausführungsform verwendet die vorliegende Erfindung Silikonkautschukformulierungen, bestehend aus:
- 100 Gewichtsteile der Komponente A),
- 0 bis 75, bevorzugt > 0 bis 75 Gewichtsteile der Komponente B),
- 0 bis 300 Gewichtsteile der Komponente C),
- 0 bis 10 Gewichtsteile der Komponente D),
- 0 bis 25, bevorzugt > 0 bis 25 Gewichtsteile der Komponente E),
- 0 bis 2, bevorzugt > 0 bis 2 Gewichtsteile der Komponente F),
- 0 bis 15 Gewichtsteile der Komponente G),
- 0 bis 1, bevorzugt > 0 bis 1 Gewichtsteile der Komponente H),
- 0,2 bis 30, bevorzugt 0, 2 bis 20 Gewichtsteile der Komponente I), und
- bezogen auf die Gesamtmenge der Komponenten A) bis I), 10 bis 100 ppm der Komponente J), bezogen auf das Metall der Platingruppe in der Komponente J).

In einer weiteren bevorzugten Ausführungsform verwendet die Erfindung Silikonkautschukformulierungen, worin
- das Polysiloxan A) mindestens ein Polysiloxan der Formel (I) ist:

   **R'SiR"₂O(SiR"₂O)ₓSiR"₂R',**

   worin die Substituenten R' und R" jeweils gleich oder verschieden sein können, und jeweils Alkylreste mit 1-8 C-Atomen, Arylreste, Vinylreste und Fluoralkylreste mit 3-8 C-Atomen sind, x einen Wert von 0 bis 12000 besitzt, und das über mindestens zwei olefinisch ungesättigte Mehrfachbindungen verfügt,
- der Füllstoff B) eine spezifische Oberfläche zwischen 50 und 400 m²/g nach BET aufweist und
- der Katalysator aus der Platingruppe J) ein Katalysator ist, der die Hydrosilylierungsreaktion katalysiert und ausgewählt wird aus Metallen der Platingruppe, wie Pt, Rh, Ni, Ru, und Verbindungen von Metallen der Platingruppe, wie Salze oder Komplexverbindungen davon.

In einer weiteren bevorzugten Ausführungsform verwendet die Erfindung Silikonkautschukformulierungen, worin
- der Füllstoff B) aus Kieselsäuren mit einer Oberfläche nach BET zwischen 50 und 400 m²/g ausgewählt wird,
- das ungesättigte Hydrophobierungsmittel F) aus der Gruppe, bestehend aus 1,3-Divinyltetramethyldisilazan und Trialkoxysilanen mit ungesättigten Alkenyl-, Alkenylaryl-, Acryl-, Methacryl-Gruppen ausgewählt wird,
- das trimethylsilylendgestoppte Polysiloxan G) aus Polysiloxanen mit Dimethylsiloxy-, Diphenylsiloxy- oder Phenylmethylsiloxy-Gruppen ausgewählt wird, mit der Maßgabe, dass es keine funktionellen Gruppen enthält, die an der Hydrosilylierungsreaktion teilnehmen,
- das Polyhydrogensiloxan I), ein Polyhydrogensiloxan ist, das über mindestens zwei direkt an verschiedene Silicium-Atome gebundene Wasserstoffatome verfügt der Formel II

   X₂DₘD^{H}ₙ

   worin
   a) X = M, m:n > 1, n ≥ 2 und m+ > 4,
   b) X = M^{H}, m ≥ 1, n ≥ 0 und m+n ≥ 1, oder
   c) X = M und M^{H}, m ≥ 1 und n > 0,
   und die D-Einheiten gegebenenfalls ersetzt sein können durch D^{Vi}, D^{Phe2}, D^{PheMe}, T, T^{Phe} Q, Bis(dialkylsilyl)(C₁-C₈)alkandiyl, wie Bisdialkylsilylmethylen oder Bisdialkylsilylethylen oder Bisdialkylsilylarylen, die D^{H}-Einheiten durch T^{H} gegebenenfalls ersetzt sein können, und die M-Einheiten ersetzt sei können durch M^{Vi}, M^{Phe},
   mit einem SiH-Gehalt von unter 10 mmmol/g , verzugsweise unter 9 mmol/g, und worin die MeSiHO-Einheiten statistisch mindestens durch eine der Einheiten D, D^{Phe2}, D^{PheMe}, Bisdialkylsilylmethylen, Bisdialkylsilylethylen oder Bisdialkylsilylarylen getrennt sind, und
- der Katalysator J), enthaltend ein Element aus der Platingruppe, ausgewählt wird aus Platin und Platinverbindungen, die gegebenenfalls auf einen Träger aufgezogen sein können, sowie anderen Verbindungen von Elementen der Platingruppe.

Weiterhin sind in den erfindungsgemäß verwendeten Silikonkautschukformulierungen bevorzugt in der Komponente I) in der Polymerkette statistisch keine SiH-Einheiten benachbart, sondern durch andere Siloxyeinheiten getrennt, so dass jede MeSiHO-(D^{H})- bzw. T^{H} Einheit durch mindestens eine der Einheiten D^{Vi}, D^{Phe2}, D^{PheMe}, T, T^{Phe}, Q, Bis(dialkylsilyl)(C₁-C₈)alkandiyl, wie Bisdialkylsilylmethylen oder Bisdialkylsilylethylen oder Bisdialkylsilylarylen, statistisch von der nächsten MeSiHO-Einheit getrennt ist.

Weiterhin ist in den erfindungsgemäß verwendeten Silikonkautschukformulierungen bevorzugt das molare Verhältnis der Summe der SiH-Gruppen in der Komponente I) zur Summe der Si-Vinyl-Gruppen in den Komponenten A) sowie F) 0,8 bis 10.

Weiterhin werden in den erfindungsgemäß verwendeten Silikonkautschukformulierungen bevorzugt als Katalysator J) 20-100 ppm Pt, bezogen auf die Menge der Komponente A) bis I), in Form von Pt-Salzen, Pt-Komplexverbindungen mit Stickstoff-, Phosphor- und/oder Alkenylverbindungen oder Pt-Metall auf Trägem eingesetzt.

Weiterhin wird in den erfindungsgemäß verwendeten Silikonkautschukformulierungen das gesättigte Hydrophobierungsmittel E) aus der Gruppe ausgewählt, die aus Disilazanen, Silylaminen und/oder Silanolen besteht.
Im Rahmen der vorliegenden Erfindung hat die Komponente A) vorzugsweise die Bedeutung linearer oder verzweigter Polysiloxane der allgemeinen Formel (I)

**R'SiR"₂O(SiR"₂O)ₓSiR"₂R'** **(I)**

worin die Substituenten R' und R" jeweils gleich oder verschieden sein können, und jeweils Alkylreste mit 1-12 C-Atomen, Arylreste, Vinylreste und Fluoralkylreste mit 1-12 C-Atomen sind, x einen Wert von 0 bis 12000 besitzt, und das über mindestens zwei olefinisch ungesättigte Mehrfachbindungen verfügt und das gegebenenfalls Verzweigungseinheiten der Formel SiO_{4/2} und R'SiO_{3/2} aufweisen kann, worin R' die oben angegebene Bedeutung aufweisen kann.

Die Reste R' können einem Polysiloxan-Molekül der Formel (I) gleich oder verschieden sein. Die Reste R" können einem Polysiloxan-Molekül der Formel (I) gleich oder verschieden sein. Die Reste R" sind in der vorliegenden Erfindung bevorzugt Alkylreste mit 1-12 C-Atomen. Alkylreste mit 1-12 C-Atomen sind im Rahmen der vorliegenden Erfindung zweckmäßig aliphatische Kohlenstoffwasserstoffverbindungen mit 1 bis 12 Kohlenstoffatomen, die geradkettig oder verzweigt sein können. Beispielhaft seien Methyl, Ethyl, Propyl, n-Butyl, Pentyl, Hexyl, Heptyl, Nonyl, Decyl, iso-Propyl, Neopentyl, und 1,2,3 Trimethylhexyl aufgeführt. Bevorzugt werden R' und R" aus Methyl und Vinyl ausgewählt.

Der Begriff "Fluoralkylreste mit 1-12 C-Atomen sind" bedeutet im Rahmen der vorliegenden Erfindung aliphatische Kohlenstoffwasserstoffreste mit 1 bis 12 Kohlenstoffatomen, die geradkettig oder verzweigt sein können und mit mindestens einem Fluoratom substituiert sind. Beispielhaft seien Perfluoralkylethylen, 1,1,1-Trifluorpropyl, 1,1,1-Trifluorbutyl aufgeführt. Bevorzugt ist Trifluorpropyl für R".

Der Begriff "Aryl" bedeutet im Rahmen der vorliegenden Erfindung unsubstituierte oder ein oder mehrfach mit F, Cl, CF₃, C₁-C₆-Alkyl, C₁-C₆-Alkoxy, C₃-C₇-Cycloalkyl C₂-C₆-Alkenyl oder Phenyl substituiertes Phenyl. Der Ausdruck kann gegebenenfalls auch Naphthyl bedeuten. Bevorzugt ist Phenyl für R".

Die Viskosität von Komponente A) beträgt vorzugsweise zwischen 10⁻³ und 50000 Pa.s bei 25°C im Schergeschwindigkeitsgefälle von D = 1 sec⁻¹, besonders bevorzugt zwischen 1 und 30000 Pa·s und ganz besonders bevorzugt zwischen 10 und 25000 Pa·s.

Mit der dem Fachmann vertrauten Nomenklatur (W. Noll: Chemie und Technologie der Silikone, VCH, Weinheim, 1968):

Q: SiO_{4/2}

M:(CH₃)₃SiO_{1/2}

D:(CH₃)₂SiO_{2/2}

T:(CH₃)SiO_{3/2}

M^{Vi}: (CH₂=CH)(CH₃)₂SiO_{1/2}

D^{Vi}: (CH₂=CH)(CH₃)SiO_{2/2}

lassen sich folgende Beispiele für die allgemeine Struktur der Komponente A) angeben:

M₂D₁₀₀₋₁₀₀₀D₃₋₃₀^{Vi}

M₂^{Vi}D₁₀₀₋₈₀₀₀

M₂D₁₀₋₆₀₀₀

M₂^{Vi}D₄₀₀₀₋₁₀₀₀₀D₇₋₂₀₀₀^{Vi}

M₂^{Vi} D₄₀₀₀₋₁₀₀₀₀

M₀₋₅ M₅₋₀ ^{Vi}D₅₀₋₁₀₀₀T₁₋₅

QM^{Vi}₁₋₄ D_{0,1-20}.

Darin bedeuten die Indizes Bereiche der mittleren Polymerisationsgrade.
Der molare Anteil an ungesättigten Resten kann beliebig gewählt werden. Der molare Anteil an ungesättigten Gruppen liegt zweckmäßig zwischen 0 und 5 mmol/g, bevorzugt 0,02 bis 0,05 mmol/g, liegen.
Im Rahmen der vorliegenden Erfindung hat die Komponente B) die Bedeutung eines Füllstoffes mit einer spezifischen Oberfläche zwischen 50 und 500 m²/g nach BET. Dabei handelt es sich zweckmäßig um verstärkende Füllstoffe. Verstärkend bedeutet dabei, dass die mechanischen Festiäkeitseigenschaften verbessert, insbesondere die Zugfestigkeit, Weiterreißfestigkeit, etc. verbessert werden. Der Zusatz der verstärkenden Füllstoffe wird zweckmäßig so durchgeführt, dass die elektrischen Eigenschaften der ausgehärteten erfindungsgemäßen Mischungen positiv beeinflusst bzw. nicht verschlechtert werden. Dies wird wie z.B. durch den Zusatz von gefällter oder pyrogener, bevorzugt pyrogener Kieselsäure mit einer BET-Oberfläche von 50 bis 500 m²/g erreicht (Die BET-Oberfläche wird bestimmt nach S. Brunauer, P H. Emmett, E. Teller, J. Am. Soc. 60, 309 (1938)). Bei den Füllstoffen kann es sich um hydrophobe oder hydrophile Füllstoffe handeln. Die Füllstoffe B) können oberflächenmodifiziert, d.h. hydrophobiert, sein, z.B. mit siliciumorganischen Verbindungen. Die Modifizierung kann vor oder auch während der Compoundierung zur erfindungsgemäßen Silikonkautschukformulierung erfolgen. Bevorzugt erfolgt die Hydrophobierung mit den Komponenten E) und/oder F) gegebenfalls unter Zusatz von Wasser. Bevorzugt erfolgt die Hydrophobierung mit gesättigten oder ungesättigten Disilazanen und Methylsilanolen, die ggf. auch aus den Disilazanen erzeugt werden können, gemäß der Definition der Komponenten E) oder F).
Vorzugsbereiche der BET-Oberfläche des Füllstoffes B) sind 50 bis 400, besonders bevorzugt 150 bis 300 m²/g. Die Menge der Komponente B) beträgt zweckmäßig zwischen 0 und 75 Gewichtsteile pro 100 Gewichtsteile der Komponente A), bevorzugt 20 bis 50 Gewichtsteile.
Im Rahmen der vorliegenden Erfindung ist die Komponente C) mindestens ein Füllstoff mit einer spezifischen Oberfläche unter 50, bevorzugt unter 40 noch bevorzugter unter 30 m²/g nach BET. Zweckmäßig handelt es sich um sogenannte "nichtverstärkende Füllstoffe", die die mechanischen Eigenschaften, insbesondere die Zugfestigkeit, Weiterreißfestigkeit, etc. nicht verbessern. Bevorzugt handelt es sich um Diatomeenerden, feinteilige Quarz- bzw. Cristobalitmehle, andere amorphe Kieselsäuren oder Silikate. Die Menge der Komponente C) - beträgt zweckmäßig zwischen 0 und 300 Gewichtsteile pro -100 Gewichtsteile der Komponente A), bevorzugt 0 bis 50 Gewichtsteile.

Im Rahmen der vorliegenden Erfindung schließt der Begriff "Hilfsstoff" gemäß Komponente D) zweckmäßig Pigmente Trennmittel, Extrusionshilfsmittel sowie Heißluftstabilisatoren, d.h. Stabilisatoren gegen Heißluftalterung ein. Zweckmäßig werden die Trennmittel aus der Gruppe von Formtrennmitteln wie z.B. Stearylderivaten oder Wachsen, Metallsalzen der Fettsäuren ausgewählt. Extrusionsmittel sind z.B. Borsäure oder PTFE-Pasten. Heißluftstabilisatoren sind z.B. Metalloxide, wie Oxide und/oder Carbonate sowie weitere Salze und Komplexverbindungen des Fe, Al, Zn, Ti, Zr, Ce oder anderer Lanthanoide und Antioxidationsmittel. Die Menge der Komponente D) beträgt zweckmäßig zwischen 0 und 10 Gewichtsteile pro 100 Gewichtsteile der Komponente A), wobei die Anwesenheit von mehr als 3 Gewichtsteilen, bevorzugt mehr als 2 Gewichtsteilen Metalloxide, wie Oxide und/oder Carbonate sowie weiterer Salze und Komplexverbindungen des Fe, Al, Zn, Ti, Zr, Ce oder anderer Lanthanoide ausgenommen sind. Bevorzugt enthält die erfindungsgemäße Silikonformulierung keine Metalloxide, wie Oxide und/oder Carbonate sowie keine weiteren Salze und Komplexverbindungen des Fe, Al, Zn, Ti, Zr, Ce oder anderer Lanthanoide.

Im Rahmen der vorliegenden Erfindung ist die Komponente E) mindestens ein gesättigtes Hydrophobierungsmittel aus der Gruppen, bestehend aus Disilazanen, Siloxandiolen, Alkoxysilanen, Silylaminen, Silanolen, Acetoxysiloxanen, Acetoxysilanen, Chlorsilanen, Chlorsiloxanen und Alkoxysiloxanen. Die Komponente E) dient dazu, die Füllstoffe C) bevorzugt B) zu hydrophobieren. Die Hydrophobierung kann dabei vor der Compoundierung separat erfolgen oder während der Compoundierung *in-situ.* Die Menge der Komponente E) beträgt zweckmäßig, bezogen auf 100 Gewichtsteile B), 0 bis 25 Gewichtsteile.

Im Rahmen der vorliegenden Erfindung ist die Komponente F) mindestens ein ungesättigtes Hydrophobierungsmittel aus der Gruppe, bestehend aus mehrfach Vinyl-substituierten Methyldisilazanen, und Methylsilanolen und Alkoxysilanen jeweils mit ungesättigten Resten aus der Gruppe, bestehend aus Alkenyl, Alkenylaryl, Acryl und Methacryl. Die Komponente F) dient ebenfalls dazu, die Füllstoffe B) und C) zu hydrophobieren. Die Menge der Komponente F) beträgt zweckmäßig, bezogen auf 100 Gewichtsteile A), 0 bis 2 Gewichtsteile.

Die Gesamtmenge der Komponenten E) und F) bezogen auf die Gesamtmenge der Komponenten B) und C), bevorzugt bezogen auf B), beträgt bevorzugt 5-25 Gew.%.

Im Rahmen der vorliegenden Erfindung - versteht man unter dem Begriff "Trimethylsilylendgestoppte Polysiloxane" gemäß der Komponente G) zweckmäßig niedermolekulare, im Sinne der Hydrosilylierungsreaktion, nicht funktionelle, nicht vernetzbare trimethylsilyl-endgestoppte Polysiloxane mit Dimethyl-, Diphenyl oder Phenylmethylsiloxy-Gruppen mit Polymerisationsgraden von 4 - 1000, die nach der Vernetzung zum Formkörper die Oberfläche der Isolatoren zuverlässig hydrophobieren, wie z.B. in EP-A-0 57 098 beschrieben. Die Menge der Komponente G) beträgt zweckmäßig, bezogen auf 100 Gewichtsteile A), 0 bis 15, bevorzugt 1 bis 3 Gewichtsteile.

Im Rahmen der vorliegenden Erfindung umfaßt der Begriff "Inhibitor für die Hydrolysierungsreaktion" gemäß der Komponente H) alle nach dem Stand der Technik bekannten Inhibitoren für die Hydrosilylierungsreaktion mit Metallen der Pt-Gruppe, wie z. B. Maleinsäure und ihre Derivate, Amine, Azole, Alkylisocyanurate,Phoshine, Phosphite und acetylenisch ungesättigte Alkohole, worin die OH-Gruppe an ein der C-C-Dreifachbindung benachbartes Kohlenstoffatom gebunden ist, wie sie z.B. in US 3 445 420 näher beschrieben sind. Vorzugsweise handelt es sich bei der Komponente G) um 2-Methyl-3-butin-2-ol oder 1-Ethinylcyclohexanol oder (±)3-Phenyl-1-butin-3-ol. Die Komponente H) wird vorzugsweise in einem Mengenanteil von 0 bis 1 Gewichtsteile bezogen auf 100 Gewichtsteile A) verwendet. Vorzugsweise ist die Komponente H) in einem Mengenanteil von 0,0001% bis 2 Gew.%, bezogen auf das Gesamtgewicht der Mischung, besonders bevorzugt 0,01 Gew.-% bis 2 Gew.-% und ganz besonders bevorzugt 0,05 Gew.-% bis 0,5 Gew.% enthalten.
Die Komponente J) ist mindestens einen Katalysator enthaltend ein Element der Platingruppe. Bevorzugt ist die Komponente J) ein Katalysator, der die Hydrosilylierungsreaktion katalysiert und ausgewählt wird aus Metallen der Platingruppe, wie Pt, Rh, Ni, Ru, und Verbindungen von Metallen der Platingruppe, wie Salze oder Komplexverbindungen davon. Weiterhin bevorzugt ist die Komponente J) ein Katalysator, enthaltend ein Element aus der Platingruppe, ausgewählt aus Platin und Platinverbindungen, die gegebenenfalls auf einen Träger aufgezogen sein können, sowie anderen Verbindungen von Elementen der Platingruppe. Platin und Platinverbindungen sind am meisten bevorzugt. So werden bevorzugt Pt-Salze, Pt-Komplexverbindungen mit Stickstoff-, Phosphor- und/oder Alkenverbindungen oder Pt-Metall auf Trägem eingesetzt. Bevorzugt sind sämtliche Pt(0)-u. Pt-(II)-Verbindungen, bevorzugt sind Pt-Olefinkomplexe und Pt-Vinylsiloxankomplexe. Besonders bevorzugt sind Pt-Vinylsiloxankomplexe, Pt-Vinyldi- und tetrasiloxankomplexe, die vorzugsweise im Siloxan über mindestens 2 oder 4 olefinisch ungesättigte Doppelbindungen verfügen (siehe z.B. US-A 3 715 334). Unter den Begriff Siloxan fallen in diesem Zusammenhang auch Polysiloxane oder auch Polyvinylsiloxane.

Darüberhinaus kann Komponente J) auch ein Umsetzungsprodukt aus reaktiven Platinverbindungen mit den Inhibitoren H) sein.
Die Menge der Komponente J) in der erfindungsgemäß verwendeten Formulierung beträgt bevorzugt, bezogen auf die Gesamtmenge der Komponenten A) bis I), 10 bis 100 ppm, bevorzugt 15 bis 80 ppm und ganz besonders bevorzugt 20 bis 50 ppm bezogen auf das Metall der Platingruppe in der Komponente J). Bevorzugt enthält die Silikonkautschukformulierungen 20-100 ppm Pt, bezogen auf die Menge der Komponenten A) bis J), in Form von Pt-Salzen, Pt-Komplexverbindungen mit Stickstoff , Phosphor- und/oder Alkenverbindungen oder Pt-Metall auf Trägern.

Im Rahmen der vorliegenden Erfindung hat die Komponente I) die Bedeutung mindestens eines Polyhydrogensiloxanes, das über mindestens zwei direkt an verschiedene Siliciumatome gebundene Wasserstoffatome verfügt, und einen Anteil von direkt an ein Siliziumatom gebundenen Wasserstoffatomen zwischen 0,5 und 7 mmol/g aufweist, gemäß der Formel (II)

X₂ Dₘ D^{H} ₙ (II)

worin
a) X = M, m:n > 1, n ≥ 2 und m+n > 4,
b) X = M^{H}, m ≥ 1, n ≥ 0 und m+n ≥ 1, oder
c) X = M und M^{H}, m ≥ 1 und n > 0,
und die D-Einheiten gegebenenfalls ersetzt sein können durch D^{Vi}, D^{Phe2} D^{PheMe}, T, T^{Phe}, Q, Bis(dialkylsilyl)(C₁-C₈)alkandiyl, wie Bisdialkylsilylmethylen oder Bisdialkylsilylethylen oder Bisdialkylsilylarylen, die D^{H}-Einheiten durch T^{H} gegebenenfalls ersetzt sein können,und die M-Einheiten ersetzt sei können durch M^{Vi}, M^{Phe}.

Darin ist mit der dem Fachmann geläufigen Nomenklatur:

M=(CH₃)₃SiO_{1/2}

M^{H}=H (CH₃)₂SiO_{1/2}

D=(CH₃)₂SiO_{2/2}

D^{H}=H (CH₃)SiO_{2/2}

D^{Vi}=(CH₂=CH)(CH₃)SiO_{2/2}

D^{Phe2}=(Phe)₂SiO_{2/2}

D^{PheMe}=(Phe)(CH₃)SiO_{2/2}

T=(CH₃)SiO_{3/2}

T^{Phe}=(Phe)SiO_{3/2}

Q=SiO_{4/2}

T^{H}=(H)SiO_{3/2}

M^{Vi}:(CH₂=CH)(CH₃)₂SiO_{1/2}

M^{Phe}=(Phe)₃SiO_{1/2}, (Phe)₂(CH₃)SiO_{1/2}, (Phe)(CH₃)₂SiO_{1/2}

Es lassen sich folgende Beispiele mit den genannten Vorzugsbereichen der Indizes m und n geben:

M₂^{H}D₁₀₋₁₀₀₀

M₂D₁₋₅₀₀D₁₋₁₀₀^{H}

M₂^{H}D₁₋₅₀₀D₁₋₂₀₀^{H}

M2^{Vi}D₁₋₅₀₀^{H}

M₂D₁-₅₀₀^{Vi}D₁₋₂₀₀^{H}

sowie
Q₁₋₁₀M^{H}₁₋₄D_{0,1-200}.

Darin sind die Indizes die mittleren Polymerisationsgrade, und es gelten die oben genannten Verhältnisse der Indizes m und n.

In der Komponente I) liegt vorzugsweise der molare Anteil von direkt an ein Siliciumatom gebundenen Wasserstoffatomen zwischen 0,5 und 7 mmol /g.
Die Menge der Komponente I) ist bevorzugt 0,2 bis 30, bevorzugt 0,2 bis 20 Gewichtsteile bezogen auf 100 Gewichtsteile der Komponente A). In der erfindungsgemäß verwendeten Silikonkautschukmischung sollten vorzugsweise die Komponenten A) + F) sowie I) in einem solchen Mengenverhältnis vorliegen, daß das molare Verhältnis von direkt an ein Siliciumatom gebundenem Wasserstoff (SiH) in der Komponente I) zu ungesättigten Resten in den Komponenten A) und F) zwischen 0,1 und 20 liegt, bevorzugt zwischen 0,8 und 10 und ganz besonders bevorzugt zwischen 1 und 5.

Die erfindungsgemäß verwendeten Siliconkautschukformulierungen bestehen aus den Komponenten A) bis J), wobei die Komponenten B) bis H) wahlweise vorhanden sind. Bevorzugt enthält die erfindungsgemäß verwendeten Siliconkautschukformulierung zusätzlich zu den notwendigen Komponenten A), I) und J) die Komponente B), E) und F). Wenn die Komponente J) kein Umsetzungsprodukt mit der Komponente H) ist, sollte H) ebenfalls in der Formulierung enthalten sein. Weiterhin ist eine Zusammensetzung, die die Komponenten A), I), J), B), E), F) und H) enthält, bevorzugt.

Das Verfahren zur Herstellung der erfindungsgemäß verwendeten Siliconkautschukformulierungen ist dadurch gekennzeichnet, dass die Komponenten A) bis I) zusammengegeben und vermischt werden.

Vorzugsweise erfolgt die Herstellung der erfindungsgemäß verwendeten Silikonkautschukformulierungen, in dem man zur Komponente A) die wahlweise verwendeten Hydrophobierungsmittel E) und F) und gegebenenfalls Wasser gibt und bei Temperaturen von 20 bis 160°C unter Stickstoffatmosphäre die Komponente D) (Füllstöff) einmischt und damit die Hydrophobierung des Füllstoffes D) unter Reaktion mit den Komponenten E) und F) bewirkt. Anschließend werden überschüssige Reaktionsprodukte E) und F) sowie flüchtige Reaktionsprodukte daraus (wie Silanole, Alkohole und Wasser) entfernt (vorzugsweise durch Erhitzen bei 150 bis 170°C ggf. unter Vakuum). In die resultierend, vorzugsweise abgekühlte Mischung dosiert man für den Fall einer Zweikomponentenformulierung entweder die Komponente H) und I) oder alternativ J). Werden die Komponenten C), D) und G) benötigt erfolgt deren Dosierung nach dem Entfernen der flüchtigen Komponenten E) und F). Im Falle der Einkomponentenformulierung werden H), I) und J) zudosiert, wobei zunächst der Inhibitor H) zudosiert wird.

Es werden übliche Mischer verwendet.

Die erfindungsgemäß verwendeten vernetzbaren Siliconkautschukmassen können dabei 1-, 2-oder aber auch mehrkomponentige Systeme sein. Mehrkomponentige Systeme sind z.B. solche, die H), I) und J) getrennt enthalten.

Durch Härtung der erfindungsmäß verwendeten Silikonformulierungen, vorzugsweise bei Temperaturen von 20 bis 250°C, können Formkörper erzeugt werden.

Gegenstand der Erfindung ist somit die Verwendung der vorstehend beschriebenen Silikonkautschukformulierungen zur Herstellung von Isolatorenen, insbesondere zur Herstellung von korona- und witterungsbeständigen Isolatoren, insbesondere für die Befestigung, Aufhängung und Stützung von Leitungen zur elektrischen Energieübertragung, wie-Hochspannungsisolatoren, insbesondere als Freiluft-isolatoren, Langstab-, Stütz-, Bahn-oder Hohlisolatoren, Kabelgarnituren, Kabel-Kupplungen, Kabel-Muffen oder Kabelendverschlüssen.

Es wurde überraschenderweise gefunden, daß sich einerseits ein erhöhter Platingehalt, sowie die erfindungsgemäß ausgewählten Polyhydrogensiloxane positiv auf die Hochspannungskriechstromfestigkeiten (HK) der Elastomere auswirken. Hierzu bewertete man die Elastomere nach dem HK-Test IEC 587. Die Ergebnisse sind den Beispielen der Tab. 2 u. 3 zu entnehmen.

### Beispiele

Die folgenden Beispiele dienen der Erläuterung der Erfindung, ohne dabei limitierend zu wirken.

### A) Herstellung der Silikonkautschuk-Grundmischung

### A1 transparente Pasten die als Vorstufen für die Beispiele 1-10 dienen

In einem Kneter wurden 500 g Polymer P1 (SiVi = 0,03 mmol/g 65 Pa.s) und 350 g Polymer P2 (SiVi = 0,05 mmol/g 10 Pa.s) jeweils als Komponente A) mit 90 g Hexamethyldisilazan als Komponente E) 0,45 g 1,3-Divinyltetramethyldisilazan als Komponente F) und 30 g Wasser unter N₂-Schutzgas gemischt. Anschließend gab man 360 g pyrogene Kieselsäure Aerosil 300 mit einer BET Oberfläche von 300 m²/g als Komponente B) in 5 Portionen hinzu und vermischte alle Bestandteile gleichmäßig zu einer homogen Paste, erwärmte diese 20 min. unter Rückfluß bei 90 bis 100°C, nach weiterem Erwärmen auf 150 bis 160°C entfernte man unter Durchleitung von N₂ die verdampfbaren Bestandteile, kühlte auf 100 °C ab und führte noch einmal 150 g Polymer P2 als Komponente A) zu. Unter Mitwirkung von Kühlwasser in der Kneteraußenwand kühlte man diese Paste auf 40 bis 50°C ab.

### A2) pigmentierte Pasten die als Vorstufen für die Beispiele 11-12 (Vergleichsversuche)dienen

Der Mischung aus A1 wurde nach dem Erkalten pro 100 g zusätzlich 7 g pyrogenes, oberflächenreiches TiO₂ (P25 Degussa-Hüls) in der oben beschriebenen Weise zugemischt.

### A3) Transparente Grundmischungen von (Fest)-Kautschuken mit Siloxandiolen als Hydrophobierungsmittel

In einem Zweiwellenkneter vermischte man bei 90 bis 120 °C 500 g eines vinylend-gestoppten Polysiloxans als Komponente A) mit einem Polymerisationsgrad von Pn 4000 und einem Vinylgehalt von 0,006 mmol/g (P3), 500 g vinylterminiertem Polysiloxan als Komponente A) mit Pn 4000 und zusätzlichen MeViSiO-Einheiten und einem Vinylgehalt von 0,026 mmol/g (P4), 450 g pyrogene Kieselsäure (BET Oberfläche 200 m²/g) als Komponente B), 76 g Polydimethylsiloxandiol Pn 10 als Komponente E) mit 4 g Vinyltriethoxysilan als Komponente F) sowie 12 g Hexamethyldisilazan als Komponente E) während einer Stunde zu einem homogenen Kautschuk. Anschließend erhitzte man diesen im Kneter auf 150 bis 160 °C und verdampfte unter Durchleiten von N₂ die niedrigsiedenden Bestandteile, wie Alkohole, Wasser und andere.

### Herstellung der Reaktivkomponenten: B1) Pt-Komponente für die Beispiele 1 bis 12

Die erkaltete Grundmischung aus A1 teilte man in 100 g-Portionen auf. Die erkaltete Grundmischung aus A2 teilte man in 107 g-Portionen auf.

### Pt-Komponente:

Zu 100 g der Grundmischung aus A1 dosierte man aus einer Pipette 0,0745 ml (Beispiele 6-10, 12) /0,3725 ml (Beispiele 1-5, 11) (D = 0,967 g/cm³) 1-Ethinylcyclohexanol als Komponente H) und 1,07 g (Beispiele 1-5, 11) bzw. 5,35 g (Beispiele 6-10, 12) einer Komplexverbindung eines Pt-(0)-Vinylsiloxan-Komplexes mit 0,15 % Pt, gelöst in Polymer P1 (entsprechend Komponente A) und vermischte die Bestandteile in einem Plastikbecher und einem Küchenmixer mit Hilfe eines Knethakens während 15 Minuten zu einer homogenen Paste.

### B2) Herstellung der Reaktivkomponente mit Pt-Katalysator für die Beipiele 13-16

Der Katalysator-Batch bestand aus Platin-Phosphitkomplex Pt [PR₃]₄ in dem R einen Phenylrest bedeutete. In dem man den Katalysator unter Verwendung eines Lösemittels in einem vinylendgestoppten Polydimethylsiloxan (entsprechend Komponente A)) der Viskosität 10 Pas (0,05 mmol/g Si-Vinyl) dispergierte, so daß der Platingehalt des Batches nach Verdampfen des Lösemittels 0,1 % Platin in dem Batch betrug.

### C1) SiH-Komponente für Grundmischung A 1 u. A2

Zu 100 g (A1; Beispiele 1-10) und 107 g (A2; Beipiele 11-12) der Grundmischung aus A1 / A2 dosierte man aus einer Pipette 6 bis 28,4 Gew.-Teile pro 100 Gew.-Teile A1 bzw. 107 Gew.-Teile A2 der verschiedenen SiH-Siloxane (CL 1- CL5, wie in Tabelle 1 definiert) nach nach Maßgabe der in Tab. 2 genannten Verhältnisse als Komponente I) in einen Plastikbecher und vermischte diese anschließend mit einem Küchenmixer mit Knethaken während 15 min zu einer homogenen Paste.
Die Dosierung der SiH-Siloxane erfolgte nach Maßgabe des Vinylgehaltes und darauf abgestimmter konstanter Stöchiometrie. Das bedingt höhere Mengen Vernetzerzugabe (Komponente I) bei sinkendem Si-H-Gehalt. '

### C2) SiH- Reaktivkomponente für Grundmischung A3) für die Beispiele 15 und 16

59 % Trimethylsilyl-endgestopptes Polydimethylsiloxan mit einem Polymerisations-grad von 4000 und einer Viskosität von 20 kPa.s bei 25°C und einem Schergefälle D = 1 sec-1, 30 % Trimethylsilyl-endgestopptes Polymethylhydrogendimethylsiloxan CL 2, 11 % hydrophile pyrogene Kieselsäure Aerosil 200 (BET Oberfläche 200 m²/g).

### C3) SiH- Reaktivkomponente für Grundmischung A3) für die Beipiele 13 und 14

C3 besteht aus 59 % Trimethylsilyl-endgestopptem Polydimethylsiloxan mit einem Polymerisationsgrad 4000, 30 % Trimethylsilyl-endgestopptes Polymethylhydrogendimethylsiloxan CL 3, 11 % hydrophile pyrogene Kieselsäure Aerosil 200 (BET Oberfläche 200 m²/g).

### D) Herstellung der vernetzten, elastomeren Testplatten

### D1 Verfahren für die Vernetzung von B1 + C1 (Beispiele 1-12)

In einem Plastikbecher vereinigte man je 100 /107 g der Komponenten B1 / B2 + 6,6 g eines Vinylsiloxans (V200 in Tabelle 2) der Viskosität 150 mPa.s und 2,08 SiVi mmol/g als Komponente A) mit 106-128 /113-135 g der Komponente C1 und vermischte die 3 Komponenten mit den Knethaken eines Küchenmixers 15 Minuten zu einer homogenen Paste.

Diese strich man in einer Menge von ca. 120 bis 130 g in eine Formplatte ein, führte Formplatte und Deckplatte einer Vulkanisationpresse (333N/cm²) zu, preßte, heizte über 10 Minuten bei 150°C, entnahm dem Formnest eine Platte von 6 x 100 mm x 180 mm und temperte diese 4h bei 200 °C unter Frischluftzufuhr in einem Umluftofen.

### D2 Verfahren für die Vernetzung von B2 + C2 bzw. C3 (Beispiele 13-16)

Die Beispiele 13 bis 16 wurden nach den für Festsilikonkautschukmischungen üblichen Methoden auf einem 2-Walzenstuhl hergestellt. Die Reihenfolge der Zugabe ist dabei nicht von Bedeutung.

### E) Prüfungen der Elastomere unter Hochspannungsbeanspruchung

In einer Prüfeinrichtung für die Hochspannungskriechwegbildung nach DIN 57 303/ IEC 587 VDE 303 Teil 10 bewertete man 5 bis 10 Prüfplatten 6 x 50 x 120 mm bezgl. des maximal zulässigen Grenzstromes 60mA, der Lochtiefe und des Masseverlustes bei vorgegebener Hochspannung. In der Auswertung wurde u.a. der Prozentsatz der Platten ermittelt, der eine Lochtiefe von mehr als 6 mm aufwies.

Den Masseverlust bestimmte man nach Reinigung. Darunter war zu verstehen, daß man die von der Elastomerplatte leicht entfernbaren Erosionsprodukte (Asche, Schlacke ) zunächst mechanisch entfernte. Abschließend wurde die noch verbliebenen Bestandteile mit einem groben Tuch abgerieben.

Die Einstufung in die Spannungsklassen erfolgte im wesentlichen nach dem Strom-limit-Kriterium, d. h Nichtüberschreiten von 60 mA für 2 sec. innerhalb der 6h Testdauer.

**Tab. 1 Zusammensetzung der SiH-Vernetzer CL 1 bis 5**

| | **SiH** mmol/g | **n** | **m** |
|---|---|---|---|
| **CL 1** | 2,3 | 20 | 100 |
| **CL 2** | 4,3 | 10 | 20 |
| **CL 3** | 7,3 | 20 | 18,7 |
| **CL4)*** | 9,3 | 3,3 | 2,7 |
| **CL5** | 11 | 30 | 10 |

Formel III M₂Dₘ D^{H}ₙ

Formel IV Qₘ M^{H}ₙ)* entspricht CL 4

**Tab. 2 Zusammensetzung und elektrische Prüfung der Mischungen mit Disilazan hydrophobiertem Füllstoff**

| **Beispiele** | SiVi / SiH | **1** | **2** | **3*** | **4*** | **5*** | **6** | **7** | **8*** | **9*** | **10*** | **11*** | **12*** |
|---|---|---|---|---|---|---|---|---|---|---|---|---|---|
| | mmol/g | | | | | | | | | | | | |
| **Grundmischung** | 0,033 | 100 | 100 | 100 | 100 | 100 | 100 | 100 | 100 | 100 | 100 | 100 | 100 |
| **V200 (g)** | 2,08 | 3,3 | 3,3 | 3,3 | 3,3 | 3,3 | 3,3 | 3,3 | 3,3 | 3,3 | 3,3 | 3,3 | 3,3 |
| **TiO2 P25** | - | - | - | - | - | - | - | - | - | - | - | 7 | 7 |
| **CL 1** | 2,3 | **14,2** | | | | | **14,2** | | | | | | |
| **CL 2** | 4,3 | | **7,6** | | | | | **7,6** | | | | | |
| **CL 3** | 7,3 | | | **4,5** | | | | | **4,5** | | | | |
| **CL 4** | 9,3 | | | | **3,5** | | | | | **3,5** | | | |
| **CL 5** | 11 | | | | | **3,0** | | | | | **3,0** | **3,0** | **3,0** |
| **Summe Teile** | | 117 | 111 | 108 | 107 | 106 | 117 | 111 | 108 | 107 | 108 | 106 | 106 |
| **enthaltend** | | | | | | | | | | | | | |
| **Pt** | ppm | **8** | **8** | **8** | **8** | **8** | **40** | **40** | **40** | **40** | **40** | **8** | **40** |
| **ECH** | ppm | 360 | 360 | 360 | 360 | 360 | 1800 | 1800 | 1800 | 1800 | 1800 | 360 | 1800 |
| | | | | | | | | | | | | | |
| SiVi | | 10,2 | 10,2 | 10,2 | 10,2 | 10,2 | 10,2 | 10,2 | 10,2 | 10,2 | 10,2 | 10,2 | 10,2 |
| SiH | | 32,6 | 32,6 | 32,6 | 32,6 | 32,6 | 32,6 | 32,6 | 32,6 | 32,6 | 32,6 | 32,6 | 32,6 |
| SiH : SiVi | | 3,2 | 3,2 | 3,2 | 3,2 | 3,2 | 3,2 | 3,2 | 3,2 | 3,2 | 3,2 | 3,2 | 3,2 |
| | | | | | | | | | | | | | |
| **Bewertung** | | | | | | | | | | | | | |
| **HK-4,5 kV²** | erfüllt | **ja** | **ja** | **nein** | **nein** | **nein** | **ja** | **ja** | **nein** | **ja** | **ja** | **nein** | **ja** |
| **Masseverlust³** | **%** | **0,4** | **2,0** | **2,2** | **3,3** | **5,1** | **0,4** | **0,4** | **1,4** | **0,4** | **2,8** | **4,45** | **0,39** |
| Zahl d.6mm Löcher | Verhältnis | **0** | **3 :10** | **2 :10** | **3 :10** | **3 :5** | **0** | | **2 :10** | **0** | **4 :10** | **3 :5** | **0** |
| Löcher anteilig | % | 0 | 30 | 20 | 30 | 60 | 0 | 0 | 20 | 0 | 40 | 60 | 0 |
| rel. DK | - | | | | | | | | | | **3** | **3,3** | |
| tan delta | - | | | | | | | | | | 0,0009 | 0,0168 | |

| | | | | | | | | | | | | | |
|---|---|---|---|---|---|---|---|---|---|---|---|---|---|
| *: Vergleichsversuche DK = relative Dielektrizitätszahl bei 50 Hz 25°C sowie tan delta als elektrischer Verlustfaktor nach DIN 53483, ² gemessen nach DIN 57303 IEC 587 60 mA 2 sec über 6h ³ gemessen vor und nach Prüfung | | | | | | | | | | | | | |

### Interpretation der Versuchsergebnisse Beispiele 1 bis 12*

Die Prüfungen der mit unterschiedlichen SiH-Vernetzern gehärteten Si-Kautschuke zeigten, daß in den Versuchen 1 bzw. 6, 7 und 12* die geringsten Masseverluste sowie die geringste Zahl von Platten mit Erosionstiefen mit mehr als 6 mm auftraten. Gleichzeitig wurde die Hochspannungsbeständigkeitsklasse 4,5 kV erreicht. Die besten Beständigkeiten wurden durch Einsatz des Vernetzers CL 1 Tab. 1 sowohl bei niedrigen als auch hohen Pt-Konzentrationen erreicht, aber auch der strukturell anders aufgebaute Vernetzer CL 4 ermöglicht ein hohes Niveau an Beständigkeit..

In den Beispielen 1 und 6 zeigte sich der Einfluß einer erhöhten Menge des Pt-Katalysators (40 statt 8 ppm) auf die Kriechstrombeständigkeit. Die in Beispiel 7 erhöhte Pt-Menge gegenüber Beispiel 2 bewirkte, daß auch der Kautschuk mit Vernetzer CL 3 auf das Niveau von Beispiel 6 bezgl. Masseverlust u. Lochzahl angehoben wurde. Der Effekt einer erhöhten Platinmenge wurde ebenfalls in Beispiel 12* beobachtet.

Die Beispiele 11* und 12* entsprachen dem Stand der Technik gemäß der EP 218 641 bezgl. der TiO₂- und Pt-Konzentrationen, denen abweichend zu den dortigen Ansprüchen die erfindungsgemäßen SiH-Siloxane statt Peroxid für die Vernetzung zugemischt worden waren. Die Beispiele 11* und 12* wiesen abweichend zu den anderen Beispielen eine erhöhte Dielektrizitätszahl sowie höhere elektrische Verlustfaktoren auf, womit der Wechselstromwiderstand niedriger als derjenige der Beispiele ohne TiO₂-Zusat liegt.

**Tab.3 Zusammensetzung und elektrische Prüfung der Mischungen mit Siloxandiol hydrophobiertem Füllstoff bei den Beispielen 13 bis 16.**

| **Beispiele** | | **SiVi/SiH** | **13*** | **14*** | **15** | **16** |
|---|---|---|---|---|---|---|
| | | mmol/g | | | | |
| **Grundmischung** | | 0,025 | 95,6 | 94,8 | 92,9 | 94,9 |
| **Pt-Batch B2** | | 0,05 | 2,6 | 2,6 | 2,5 | 1,3 |
| S**iH-Batch C2** | | - | - | - | 4,6 | 3,8 |
| **SIH-Batch C3** | | | 1,8 | 2,6 | | |
| **Summe Teile** | | | **100** | **100** | **100** | **100** |
| | **incl.** | | | | | |
| | **CL** 2 | 4,3 | | | 1,4 | 1,1 |
| | **CL** 3 | 7,3 | 0,5 | 0,8 | | |
| | | | | | | |
| | **Pt** | ppm | 26 | 26 | 25 | 13 |
| | | | | | | |
| SiVi | | | 2,5 | 2,5 | 2,4 | 2,4 |
| SiH | | | 3,9 | 5,7 | 5,9 | 4,9 |
| SiH : SiVi | | | 1,6 | 2,3 | 2,5 | 2,0 |
| | | | | | | |
| **Bewertung** | | | | | | |
| **HK-3,5 kV**² | | erfüllt | **ja** | **ja** | **ja** | **ja** |
| **Masseverlust**³ | | % | **1,3** | **1,1** | **0,7** | **1,3** |
| Zahl d. 6mm Löcher | | Verhältnis | *1 : 5* | *1 : 5* | *0* | *1 : 5* |
| anteilig | | % | 20 | 20 | 0 | 20 |
| rel. DK | | | 3 | 3 | 3 | 3 |

| | | | | | | |
|---|---|---|---|---|---|---|
| *: Vergleichsversuche | | | | | | |

### Interpretation der Versuchsergebnisse Beispiele 13* bis 16

Die Hochspännungskriechstromfestigkeit (HK) aller Beispiele in Tab. 3 unterschied sich nicht meßbar untereinander und erreichte nur die 3,5 kV-Klasse. Im Vergleich zu den Elastomeren der Tab. 2 lag hier eine anders geartete Füllstoffhydrophobierung vor. Die Beständigkeit in der Hochspannungskriechwegbildung, hier Lochanteil und Gewichtsverlust, wird auch bei den Kautschuktypen, die eine andere Hydrophobierung durch Auswahl der Komponenten E) und F) des Füllstoffes aufwiesen, beobachtet. Der unterschiedliche SiH-Gehalt gleichzeitig Ausdruck für die Abfolge der SiH-Einheiten beeinflußt Masseverlust und Lochzahl.

Beispiel 15 zeigte die höchste Beständigkeit nach Maßgabe von Masseverlust und Lochbildung. Dies wurde gegenüber Beispiel 16 durch einen höheren Pt-Gehalt und gegenüber den Beispielen 13* und 14* durch Verwendung von dem SiH-Siloxan CL2 statt CL 3 erreicht. Der eingesetzte SiH-Vernetzer CL 2 wies einen geringeren SiH-Gehalt auf als derjenige in den Beispielen 13* und 14* auf.

## Patentansprüche

1. Verwendung von Siliconkautschukformulierungen, bestehend aus
A) mindestens ein Polysiloxan der Formel (I)
**R'SiR"₂O(SiR"₂O)ₓSiR"₂R',**
worin die Substituenten R' und R" jeweils gleich oder verschieden sein können, und jeweils Alkylreste mit 1-12 C-Atomen, Arylreste, Vinylreste und Fluoralkylreste mit 1-12 C-Atomen sind, x einen Wert von 0 bis 12000 besitzt, und das über mindestens zwei olefinisch ungesättigte Mehrfachbindungen verfügt, und das gegebenenfalls Verzweigungseinheiten der Formel SiO_{4/2} und R'SiO_{3/2} aufweisen kann, worin R' die oben angegebene Bedeutung aufweisen kann,
B) gegebenenfalls mindestens einen Füllstoff mit einer spezifischen Oberfläche zwischen 50 und 500 m²/g nach BET,
C) gegebenenfalls mindestens einen Füllstoff mit einer spezifischen Oberfläche unter 50 m²/g nach BET,
D) gegebenenfalls mindestens einen weiteren Hilfsstoff,
E) gegebenenfalls mindestens ein gesättigtes Hydrophobierangsmittel aus der Gruppe, bestehend aus Disilazanen, Siloxandiolen, Alkoxysilanen Silylaminen, Silanolen, Acetoxysiloxanen, Acetoxysilanen, Chlorsilanen, Chlorsiloxanen und Alkoxysiloxanen,
F) gegebenenfalls mindestens ein ungesättigtes Hydrophobierungsmittel aus der Gruppe, bestehend aus mehrfach Vinyl-substituierten Methyldisilazanen, und Methylsilanolen und Alkoxysilanen jeweils mit ungesättigten Resten aus der Gruppe, bestehend aus Alkenyl, Alkenylaryl, Acryl und Methacryl,
G) gegebenenfalls mindestens ein trimethylsilylendgestopptes Polysiloxan,
H) gegebenenfalls mindestens einen Inhibitor für die Hydrosilylierungsreaktion,
I) mindestens ein Polyhydrogensiloxan, das über mindestens zwei direkt an verschiedene Siliciumatome gebundene Wasserstoffatome verfügt, und einen Anteil von direkt an ein Siliziumatom gebundenen Wasserstoffatomen zwischen 0,5 und 7 mmol/g aufweist, gemäß der Formel II
X₂DₘD^{H}ₙ
worin
a) X = M, m:n > 1, n ≥ 2 und m+n > 4,
b) X = M^{H}, m ≥ 1, n ≥ 0 und m+n ≥ 1, oder
c) X = M und M^{H}, m ≥ 1 und n > 0, und und die D-Einheiten gegebenenfalls ersetzt sein können durch D^{Vi}, _{I}D^{Phe2}, D^{PheMe}, T, T^{Phe}, Q, Bis(dialkylsilyl)(C₁-C₈)alkandiyl, wie Bisdialkylsilylmethylen oder Bisdialkylsilylethylen oder Bisdialkylsilylarylen, die D^{H}-Einheiten durch T^{H} gegebenenfalls ersetzt sein können, und die M-Einheiten ersetzt sei können durch M^{Vi}, M^{Phe}, und
J) mindestens einen Katalysator enthaltend ein Element der Platingruppe, wobei die Anwesenheit von mehr als 3 Gewichtsteilen Metalloxide, wie Oxide und/oder Carbonate sowie weiterer Salze und Komplexverbindungen des Fe, Al, Zn, Ti, Zr, Ce oder anderer Lanthanoide bezogen auf 100 Gewichtsteile der Komponente A) ausgenommen ist,
zur Herstellung von Isolatoren.

2. Verwendung nach Anspruch 1, worin die Silikonkautschukformulierungen bestehen aus:
- 100 Gewichtsteile der Komponente A),
- 0 bis 75 Gewichtsteile der Komponente B),
- 0 bis 300 Gewichtsteile der Komponente C),
- 0 bis 10 Gewichtsteile der Komponente D),
- 0 bis 25 Gewichtsteile der Komponente E),
- 0 bis 2 Gewichtsteile der Komponente F),
- 0 bis 15 Gewichtsteile der Komponente G),
- 0 bis 1 Gewichtsteile der Komponente H),
- 0,2 bis 30 Gewichtsteile der Komponente I), und
- bezogen auf die Gesamtmenge der Komponenten A) bis I), 10 bis 100 ppm der Komponente J), bezogen auf das Metall der Platingruppe in der Komponente J).

3. Verwendung nach Anspruch 1 oder 2, worin
- das Polysiloxan A) mindestens ein Polysiloxan der Formel (I) ist:
**R'SiR"₂O(SiR"₂O)ₓSiR"₂R',**
worin die Substituenten R' und R" jeweils gleich oder verschieden sein können, und jeweils Alkylreste mit 1-8 C-Atomen, Arylreste, Vinylreste und Fluoralkylreste mit 3-8 C-Atomen sind, x einen Wert von 0 bis 12000 besitzt, und das über mindestens zwei olefinisch ungesättigte Mehrfachbindungen verfügt, und das gegebenenfalls Verzweigungseinheiten der Formel SiO_{4/2} und R'SiO_{3/2} aufweisen kann, worin R' die oben angegebene Bedeutung aufweisen kann,
- der Füllstoff B) eine spezifische Oberfläche zwischen 50 und 400 m²/g nach BET aufweist und
- der Katalysator aus der Platingruppe J) ein Katalysator ist, der die Hydrosilylierungsreaktion katalysiert und ausgewählt wird aus Metallen der Platingruppe, wie Pt, Rh, Ni, Ru, und Verbindungen von Metallen der Platingruppe, wie Salze oder Komplexverbindungen davon.

4. Verwendung nach einem der Ansprüche 1, 2 oder 3, worin
- der Füllstoff B) aus Kieselsäuren mit einer Oberfläche nach BET zwischen 50 und 400 m²/g ausgewählt wird,
- das ungesättigte Hydrophobierungsmittel F) aus der Gruppe, bestehend aus 1,3-Divinyl-tetramethyldisilazan und Trialkoxysilanen mit ungesättigten Alkenyl-, Alkenylaryl-, Acryl-, Methacryl-Gruppen ausgewählt wird,
- das trimethylsilylendgestoppte Polysiloxan G) aus Polysiloxanen mit Dimethylsiloxy-, Diphenylsiloxy- oder Phenylmethylsiloxy-Gruppen ausgewählt wird, mit der Maßgabe, dass es keine funktionellen Gruppen enthält, die an der Hydrosilylierungsreaktion teilnehmen,
- das Polyhydrogensiloxan I), ein Polyhydrogensiloxan ist, das über mindestens zwei direkt an verschiedene Silicium-Atome gebundene Wasserstoffatome verfügt, der Formel II
X₂DₘD^{H}ₙ
worin
a) X=M, m:n > 1, n ≥ 2 und m+n >4,
b) X = M^{H}, m ≥ 1, n ≥ 0 und m+n ≥ 1, oder
c) X = M und M^{H}, m ≥ 1 und n > 0,
und die D-Einheiten gegebenenfalls ersetzt sein können durch D^{Vi}, D^{Phe2}, D^{PheMe}, T, T^{Phe}, Q, Bis(dialkylsilyl)(C₁-C₈)alkandiyl, wie Bisdialkylsilylmethylen oder Bisdialkylsilylethylen oder Bisdialkylsilylarylen, die D^{H}-Einheiten durch T^{H} gegebenenfalls ersetzt sein können,
und die M-Einheiten ersetzt sei können durch M^{Vi}, M^{Phe},
mit einem SiH-Gehalt von unter 10 mmol /g , vorzugsweise unter 9 mmol/g, und
worin die MeSiHO-Einheiten statistisch mindestens durch eine der Einheiten D, D^{Phe2}, D^{PheMe}, Bisdialkylsilylmethylen, Bisdialkylsilylethylen oder Bisdialkylsilylarylen getrennt sind, und
- der Katalysator J), enthaltend ein Element aus der Platingruppe, ausgewählt wird aus Platin und Platinverbindungen, die gegebenenfalls auf einen Träger aufgezogen sein können, sowie anderen Verbindungen von Elementen der Platingruppe.

5. Verwendung nach einem der Ansprüche 1 bis 4, **dadurch gekennzeichnet, daß** in der Komponente I) in der Polymerkette statistisch keine SiH-Einheiten benachbart sind, sondern durch andere Siloxyeinheiten getrennt sind, so dass jede MeSiHO-(D^{H})-Einheit durch mindestens eine der Einheiten D^{Vi}, D^{Phe2}, D^{PheMe}, T, T^{Phe}, Q, Bis(dialkylsilyl)(C₁-C₈)alkandiyl, wie Bisdialkylsilylmethylen oder Bisdialkylsilylethylen oder Bisdialkylsilylarylen, sowie T^{H} statistisch von der nächsten MeSiHO-Einheit getrennt ist.

6. Verwendung nach einem der Ansprüche 1 bis 5, **dadurch gekennzeichnet, daß** das molare Verhältnis der Summe der SiH-Gruppen in der Komponente I) zur Summe der Si-VinylGruppen in den Komponenten A) sowie F) 0,8 bis 10 ist.

7. Verwendung nach einem der Ansprüche 1 bis 6, **dadurch gekennzeichnet, daß** als Katalysator J) 20-100 ppm Pt, bezogen auf die Gesamtmenge der Komponenten A) bis I), in Form von Pt-Salzen, Pt-Komplexverbindungen mit Stickstoff-, Phosphor- und/oder Alkenverbindungen oder Pt-Metall auf Trägern eingesetzt wird.

8. Verwendung nach einem der Ansprüche 1 bis 7, **dadurch gekennzeichnet, daß** die gesättigten Hydrophobierungsmittel E) aus der Gruppe ausgewählt werden, die aus Disilazanen, Silylaminen und/oder Silanolen besteht.

## Claims

1. Use of silicone rubber formulations consisting of
A) at least one polysiloxane of the formula (I)
R'SiR"₂O(SiR"₂O)ₓSiR"₂R',
wherein the substituents are R' and R" can each be the same or different and are each alkyl radicals having 1-12 carbon atoms, aryl radicals, vinyl radicals and fluoroalkyl radicals having 1-12 carbon atoms, x has s a value of 0 to 12 000 and which has at least two olefinically unsaturated multiple bonds, and wich may optionally have branching units of the formula SiO_{4/2} and R'SiO_{3/2}, wherein R' can have the meaning indicated above,
B) optionally at least one filler having a specific surface area between 50 and 500 m²/g according to BET,
C) optionally at least one filler having specific surface area below 50 m²/g according to BET,
D) optionally at least one further auxiliary material,
E) optionally at least one saturated hydrophobicizing agent from the group consisting of disilazanes, siloxanediols, alkoxysilanes silylamines silanols, acetoxysiloxanes, acetoxysilanes, chlorosilanes, chlorosiloxanes and alkoxysiloxanes,
F) optionally at least one unsaturated hydrophobicizing agent from the group consisting of multiply vinyl-substituted ethyldisilazanes and methylsilanols and alkoxysilanes each having unsaturated radicals from the oup consisting of alkenyl, alkenylaryl, acryl and methacryl,
G) optionally at least one trimethylsilyl end-stopped polysiloxane,
H) optionally at least one inhibitor for the hydrosilylation reaction,
I) at least one polyhydrogensiloxane that has at least two hydrogen atoms that are directly bonded to different silicon atoms and has a portion, between 0.5 and 7 mmol/g, of atom directly bonded to a silicon atom, in accordance with the formula II
X₂DₘD^{H}ₙ
wherein
a)X=M,m:n> 1,n≥2 and m + n>4,
b) X=M^{H}, m ≥ 1, n ≥ 0 and m+n≥ 1, or
c)X=M and M^{H}, m ≥ and n> 0, and
and the D units may optionally be replaced by D^{Vi}, D^{Phc2}, D^{PheMc}, T, T^{Phe}, Q, bis (dialkylsilyl)(C₁-C₈)alkanediyl, such as bisdialkylsilylmethylene or bisdialkylsilylethylene or bisdialkylsilylarylene, the D^{H} units may optionally be replaced by T^{H}, and the M units may be replaced by M^{Vi}, M^{Phe}, and
J) at least one catalyst containing an element from the platinum group, although the presence of more than 3 parts by weight of metal oxides, such as oxides and/or carbonates also further salts and complex compounds of Fe, Al, Zn, Ti, Zr, Ce or other lanthanides based on 100 parts by weight of component A) shall be excluded, in the manufacture of insulators.

2. Use according to Claim 1, wherein the silicone rubber formulations consist of:
- 100 parts by weight of component A),
- 0 to 75 parts by weight of component B),
- 0 to 300 parts by weight of component C),
- 0 to 10 parts by weight of component D),
- 0 to by weight of component 3),
- 0 to 2 parts by weight of component F),
- 0 to 15 parts by weight of component G),
- 0 to 1 part by weight of component H),
- 0.2 to 30 parts by weight of component I), and
- based on the total amount of components A) to I), 10 to 100 ppm of component J), based on the metal from the platinum group in component J).

3. Use according to Claim 1 or 2, wherein
- the polysiloxane A) is at least one polysiloxane of the formula (I):
R'SiR"₂O(SiR"₂O)ₓSiR"₂R',
wherein the substituents R' and R" may each be the same or different, and are each alkyl radicals having 1 to 8 carbon atoms, aryl radicals, vinyl radicals or fluoroalkyl radicals having 3-8 carbon atoms, x has a value of 0 to 12 000, and which has at least two olefinically unsaturated multiple bonds, and which may optionally have branching units of the formula SiO_{4/2} and R'SiO_{3/2}, wherein R' can have the meaning indicated above,
- the filler B) has a specific surface area between 50 and 400 m²/g according to BET, and
- the catalyst from the platinum group J) is a catalyst which catalyses the hydrosilylation reaction and is selected from metals of the platinum group, such as Pt, Rh, Ni, Ru, and compounds of metals of the platinum group, such as salts or complex compounds thereof.

4. Use according to any one of Claims 1, 2 or 3, wherein
- the filler B) is selected from silicas having a BET surface area between 50 and 400 m²/g,
- the unsaturated hydrophobicizing agent F) is selected from the group consisting of 1,3-divinyltetramethyldisilazane and trialkoxysilanes having unsaturated alkenyl, alkenylaryl, acryl or methacryl groups,
- the trimethylsilyl end-stopped polysiloxane G) is selected from polysiloxanes having dimethylsiloxy, diphenylsiloxy or phenylmethylsiloxy groups, with the proviso that it contains no functional groups that participate, in the hydrosilylation reaction,
- the polyhydrogen siloxane I) is a polyhydrogensiloxane that has at least two hydrogen atoms that are directly bonded to different silicon atoms, of the formula II
X₂DₘD^{H}ₙ
wherein
a) X= M, m:n >1, n ≥ 2 and m+n> 4,
b) X = M^{H}, m≥ 1, n ≥ 0 2 and m+n≥ 1, or,
c) X = M and M^{H}, m ≥ 1 and n > 0,
and the D units may optionally be replaced by D^{Vi}, D^{Phe2}, D^{PheMe}, T, T^{Phe}, Q, bis(dialkylsilyl)(C₁₋C₈)alkanediyl, such as bisdialkylsilylmethylene or bisdialkylsilylethylene or bisdialkylsilylarylene, the D^{H} units may optionally be replaced by T^{H}, and the M units may be replaced by M^{Vi}, M^{Phe}, with an SiH content of below 10 mmol/g, preferably below 9 mmol/g, and wherein the MeSiHO units are statistically separated at least by one of the units D, D^{Phe2}, D^{PheMe}, bisdialkylsilylmethylene, bisdialkylsilylethylene or bisdialkylsilylarylene, and
- the catalyst, J) containing an element from platinum group, is selected from platinum or platinum compounds, which may optionally have been applied to a carrier, and also other compounds of elements of the platinum group.

5. Use according to any one of Claims 1 to 4, **characterized in that**, in component I), in the polymer chain, statistically no SiH units are adjacent, but are separated by other siloxy units, so that each MeSiHO-(D^{H}) unit is statistically separated from the next MeSiHO unit by at least one of the units D^{Vi}, D^{Phe2}, D^{PheMe}, T, T^{Phe}, Q, bis(diakylsilyl)(C₁-C₈)alkanediyl, such as bisdialkylsilylmethylene or bisdialkylsilylethylene or bisdialkylsilylarylene, and also T^{H}.

6. Use according to any one of Claims 1 to 5, **characterized in that** the molar ratio of the sum of the SiH groups in the component I) to the sum of the Si-vinyl groups in the components A) and F) is in the range from 0.8 to 10.

7. Use according to any one of Claims 1 to 6, **characterized in that** catalyst J) comprises 20- 100 ppm of Pt, based on the total amount of the components A) to I), in the form of Pt salts, Pt complex compounds with nitrogen, phosphorus and/or alkene compound or Pt metal on carriers.

8. Use according to any one of Claims 1 to 7, **characterized in that** the saturated hydrophobicizing agents E) are selected from the group consisting of disilazanes, silylamines and/or silanols.

## Revendications

1. Utilisation de compositions de caoutchouc silicone, constituées de
A) au moins un polysiloxane de formule (I)
**R'SiR"₂O(SiR"₂O)ₓSiR"₂R',**
dans laquelle les substituants R' et R" peuvent chaque fois être identiques ou différents et représentent chacun des radiaux alkyle ayant de 1 à 12 atomes de carbone, des radicaux aryle, des radicaux vinyle et des radicaux fluoroalkyle ayant de 1 à 12 atomes de carbone, x a une valeur allant de 0 à 12 000, et qui dispose d'au moins deux liaisons multiples à insaturation oléfinique, et qui peut omporter éventuellement des unités de ramification de formules SiO_{4/2} et R'SiO_{3/2}, où R' peut avoir la signification donnée ci-dessus,
B) éventuellement au moins une charge ayant une surface spécifique comprise entre 50 et 500 m²/g selon BET,
C) éventuellement au moins une charge ayant une surface spécifique inférieure à 50 m²/g selon BET,
D) éventuellement au moins un autre adjuvant,
E) éventuellement au moins un agent d'hydrophobie saturé, choisi dans l'ensemble constitué par les disilazanes, siloxanediols, alcoxysilanes, silylamines silanols, acétoxysiloxanes, acétoxysilanes, chlorosilanes, chlorosiloxanes et alcoxysiloxanes,
F) éventuellement au moins un agent d'hydrophobie insaturé choisi dans l'ensemble constitué par les méthyldisilazanes plusieurs fois substitués par vinyle, et les méthylsilanols et alcoxysilanes comportant des radicaux insaturés choisis dans l'ensemble constitué par les groupes alcényle, alcénylaryle, acryloyle et méthacryloyle,
G) éventuellement au moins un polysiloxane coiffé en bout de chaîne par triméthylsilyle,
H) éventuellement au moins un inhibiteur pour la réaction d'hydrosilylation,
I) au moins un polyhydrogénosiloxane qui est doté d'au moins deux atomes d'hydrogène liés directement à des atomes de silicium différents, et présente une proportion d'atomes d'hydrogène, directement liés à un atome de silicium, comprise entre 0,5 et 7 mmoles/g, selon la formule II
X₂DₘD^{H}ₙ
où
a) X = M, m:n > 1, n ≥ 2 et m+n > 4,
b) X = = M et M^{H} 1, m ≥ 1 et n > 0, et ≥ 1, ou
c) X = et M^{H}, m ≥ 1 et n > 0, et
les unités D peuvent éventuellement être remplacées par D^{Vi}, D^{Phe2}, D^{PheMe} T, T^{Phe}, Q, bis(dialkylsilyl)alcane(C₁-C₈)diyle, tel que bisdialkylsilylméthylène ou bisdialkylsilyléthylène ou bisdialkylsilylarylène,
les unités D^{H} peuvent éventuellement être remplacées par T^{H},
et les unités M peuvent être remplacées par M^{H}, M^{Phe}, et
J) au moins un catalyseur contenant un élément de la famille du platine,
la présence de plus de 3 parties en poids d'oxydes métalliques, tels que des oxydes et/ou des carbonates, ainsi que d'autres sels et composés complexes du Fe, de l'Al, du Zn, du Ti, du Zr, du Ce ou d'autres lanthanides, par rapport à 100 parties en poids du composant A), étant exclue, pour la fabrication d'isolants.

2. Utilisation selon la revendication 1, dans laquelle les compositions de caoutchouc silicone sont constituées de :
- 100 parties en poids du composant A),
- 0 à 75 parties en poids du composant B),
- 0 à 300 parties en ponds du composant C),
- 0 à 10 parties en poids du composant D),
- 0 à 25 parties en poids du composant E),
- 0 à 2 parties en poids du composant F),
- 0 à 15 parties en poids du composant G),
- 0 à 1 partie en poids du composant H), 0,2 à 30 parties en poids du composant I) et
- par rapport à la quantité totale des composants A) à I), 10 à 100 ppm du composant J), sur la base du métal de la famille du platine dans le composant J).

3. Utilisation selon la revendication 1 ou 2, dans laquelle
- le polysiloxane A) est au moins un polysiloxane de formule (I) :
R'SiR"₂O (SiR"₂O) ₓSiR"₂R' ,
dans laquelle les substituants R' et R" peuvent chaque fois être identiques ou différents et représentent chacun des radicaux alkyle ayant de 1 à 8 atomes de carbone, des radicaux aryle, des radicaux vinyle et des radicaux fluoroalkyle ayant de 3 à 8 atomes de carbone, x a une valeur allant de 0 à 12 000, et qui dispose d'au moins deux liaisons multiples à insaturation oléfinique, et qui peut comporter éventuellement des unités de ramification de formules SiO_{4/2} et R'SiO_{3/2}, où R' peut avoir la signification donnée ci dessus,
- la charge B) a une surface spécifique comprise entre 50 et 400 m²/g selon BET et
- le catalyseur choisi dans la famille du platine J) est un catalyseur qui catalyse la réaction d'hydrosilylation et est choisi parmi des métaux de la famillle du platine, tels que Pt, Rh, Ni, Ru et des composés de métaux de la famille du platine, tels que des sels ou des composés complexes de ceux-ci.

4. Utilisation selon l'une quelconque des revendications 1, 2 et 3, dans laquelle
- la charge B) est choisie parmi des acides siliciques ayant une surface selon BET comprise
- entre 50 et 400 m²/g,
- l'agent d'hydrophobie F) insaturé est choisi dans l'ensemble constitué par le 1,3-divinyl-tétraméthyldisilazane et des trialcoxysilanes comportant des groupes alcényle, alcénylaryle, acryloyle, méthacryloyle insaturés,
- le polysiloxane G) Coiffé en bout de chaîne par triméthylsilyle est choisi parmi des polysiloxanes à groupes diméthylsiloxy, diphénylsiloxy ou phénylméthylsiloxy, étant entendu qu'il ne contient pas de groupes fonctionnels qui prennent part à la réaction d'hydrosilylation,
- le polyhydrogénosiloxane I) est un polyhydrogénosiloxane i est doté d'au moins deux atomes d'hydrogène liés directement à des atomes de silicium différents, de formule II à du
X₂DₘD^{H}ₙ
où
a) X = M, m:n > 1, n ≥ 2 et m+n > 4,
b) X = M^{H}, m ≥ 1, n ≥ 0 et + n ≥ 1, ou
c) X = M et M^{H}, m ≥ 1 et n > 0,
et les unités D peuvent éventuellement être remplacées par D^{Vi}, D^{phe2}, D^{PhEMe}, T, T^{Phe}, Q, bis (dialkylsilyl) alcane (C₁-C₈) diyle, tel que bisdialkylsilylméthylène ou bisdialkylsilyléthylène ou bisdialkylsillylarylène, les unités D^{H} peuvent éventuellement être remplacées par T^{H}, et les unités M peuvent être remplacées par M^{Vi}, M^{Phe},
avec une teneur en SiH de moins de 10 mmoles/l, de préférence de moins de 9 mmoles/g, et
dans lequel les unités MeSiHO sont séparées statistiquement au moins par l'une des unités D, D^{Phe2}, D^{PheMe}, bisdialkylsilylméthylène, bisdialkylsilyléthylène ou bisdialkylsilylarylène, et
- le catalyseur J), contenant un élément de la famille du platine, est choisi parmi le platine et des composés du platine qui peuvent éventuellement être fixé sur un support ainsi que d'autres composés d'éléments de la famille du platine.

5. Utilisation selon l'une quelconque des revendications 1 à 4, **caractérisée en ce que** dans le composant I) statistiquement il n'y pas dans la chaîne polymère d'unités SiH qui sont contiguës, mais au contraire ces unités sont séparées par d'autres unités siloxy, de sorte que chaque unité MeSiHO-(D^{H}) est statistiquement séparée de l'unité suivante par au moins l'une des unités D^{Vi}, D^{Phe2}, D^{PheMe}, T, T^{Phe}, Q, bis (dialkylsilyl) alcane (C₁-C₈) diyle, tel que bisdialkylsilylméthylène ou bisdialkylsilyléthylène ou bisdialkylsilylarylène, ainsi que T^{H}.

6. Utilisation selon l'une quelconque des revendications à 5, **caractérisée en ce que** le rapport molaire de la somme des groupes SiH dans le composant I) à la somme des groupes Si-vinyle dans les composants A) que F) va de 0 à 10.

7. Utilisation selon l'une quelconque des revendications à 6, en ce qu'on utilise en tant que catalyseur J) 20-100 ppm de Pt, par rapport à la quantité totale des composants A) à I), sous forme de sels de Pt, de composés complexes de Pt avec des composés azotés, phosphorés et/ou alcène ou Pt métallique fixé sur des supports.

8. Utilisation selon l'une quelconque des revendications 1 à 7, **caractérisée en ce que** les agents d'hydrophobie saturés E) sont choisis dans le groupe qui consiste en disilazanes, silylamines et/ou silanols.
